# EUROPEAN PATENT SPECIFICATION

(11) **EP 2 871 097 B1**
(45) Date of publication and mention of the grant of the patent: **26.12.2018**
(21) Application number: 13191955.7
(22) Date of filing: 07.11.2013
(51) Int. Cl.: B60R 9/04, B60R 9/058

(54) **A load carrier foot**
Lastträgerfuß
Pied de porte-charge

(43) Date of publication of application: 13.05.2015
(73) Proprietor: Thule Sweden AB, 330 33 Hillerstorp (SE)
(72) Inventor: Ferman, Magnus, S-331 54 VÄRNAMO (SE); Sandberg, Mikael, S-302 72 HALMSTAD (SE)
(74) Representative: Valea AB

(56) References cited:
- CN-A- 102 094 886
- DE-A1- 10 150 132
- GB-A- 1 381 039
- US-A- 3 899 111

## Description

### TECHNICAL FIELD

A load carrier foot for a roof rack for a vehicle. The load carrier foot comprises a fastening arrangement for attachment to the roof of the vehicle. The fastening arrangement comprises a fastening member adapted to be displaced to an engagement position, in which it can engage a fastening receiving member on the vehicle and a retracted position. Such prior art carriers can be found for example in CN 102094886 A, GB 1381039 A, US 38399111 A and DE 10150132 A1.

### BACKGROUND OF THE INVENTION

Roof racks are widely used to increase the loading capacity of vehicles such as automobiles, lorries, trucks, caravans, recreational vehicles (RV's) or the like. A roof rack is mounted across the roof of the vehicle usually transversally with respect to the longitudinal extension of the vehicle. A roof rack has two load carrier foots and a load carrying bar extending there between. When a user mounts a roof rack, or simply positions the roof rack on the roof of the vehicle to fasten the roof rack on the roof of the vehicle, there is a risk that the roof rack, or parts of the roof rack, may accidentally damage the roof of the vehicle.

The user runs the risk of scratching the roof of the vehicle, which could damage the lacquer of the vehicle. Lacquer damage is not only ugly but could damage the chassi, or body, of the vehicle if left untreated for a longer period of time.

A load carrier foot which is attached to a fixed position on the vehicle, such as a welded nut, using a screw, is categorized as a fix point load carrier foot. One part of the roof rack, and especially parts on a fix point load carrier foots, is associated with a relatively high damage risk. When a user positions a roof rack having fix point load carrier foots, the screw is generally kept in place on the fix point load carrier foot by means of gravity or by means of a rubber ring. The screw is protruding underneath the fix point load carrier foot which increases the risk of a user accidentally scratching the lacquer of the vehicle as the user positions the roof rack on the roof of the vehicle. The protruding screw makes it nearly impossible for a user to temporarily rest the roof rack on the fix point load carrier foots on the roof of the vehicle without scratching the lacquer of the vehicle.

### SUMMARY

It is an object of the present disclosure to provide for a load carrier foot and a roof rack, and preferably for a fix point load carrier foot, which can be temporarily rested on the roof of a vehicle with no or very low probability to damage the roof of the vehicle. It is an object of the present disclosure to provide a load carrier foot, and a roof rack, which is easy to position on the roof of the vehicle, or to provide a useful alternative. The objects are at least partly met by a load carrier foot for a vehicle load carrier adapted to be attached to a vehicle. The load carrier foot comprising a body comprising a load carrying bar receiving surface for receiving a load carrying bar and a vehicle support surface for resting against a surface of the vehicle. A fastening member adapted to be operated by a user to attach the load carrier foot to the vehicle. The fastening member is displaceable between at least a first position in which the fastening member protrudes from the load carrier foot enabling the fastening member to interact with a surface of the vehicle when the load carrier foot is positioned on the vehicle, and a retracted position in which the fastening member is protected from interaction with a surface of the vehicle. The load carrier foot comprises a biasing member adapted to bias the fastening member to the retracted position.

The load carrier foot enables a user to temporarily rest the load carrier foot on a surface of the vehicle without exposing the vehicle for the fastening member and the risk that the fastening member may damage the vehicle, and especially the roof of the vehicle. It also makes the load carrier easier to mount to the vehicle as the user does not need to position, or align, the fastening member at the same time as the user descend the load carrier foot on the surface the roof of the vehicle. It thus enables the separation of the positioning and the aligning of the fastening member of the load carrier foot with the receiving member of the vehicle, which in many circumstances can be beneficial.

The fastening member comprises a threaded portion and a head where the fastening member is configured to be received by a threaded screw receiving member of a fixed position attachment member of the vehicle. A screw type fastening member, such as a screw is preferable. It is simple and cheap.

According to an aspect, the load carrying foot, preferably the body, comprises a support member comprising the vehicle support surface. The support member is preferably specifically adapted to the surface of the vehicle, and especially the roof of the vehicle. It is intended to be positioned directly onto the roof of the vehicle and as such it should preferably have a lenient surface towards the vehicle. A rubber like material or a hard plastic material is preferably selected. The fastening member can be adapted to extend between the vehicle support surface and the body facing surface of the support member. The support member may however be specifically adapted to be positioned on a non-sensitive position on the vehicle, e.g. no a dedicated material on the vehicle to protect the vehicle from damage. Even in such a case would it be advantageous using a load carrier foot described herein as it would still separate the positioning and the aligning of the fastening member with the receiving member on the vehicle.

According to an aspect, the load carrier foot, and the body, comprises a support member comprising the vehicle support surface and a body facing surface. The support member comprises an aperture having a first opening facing the vehicle support surface and a second opening facing the body facing surface, wherein the fastening member is adapted to extend through the aperture of the support member. The aperture of the support member thus functions as a protective housing for the fastening member, providing a void in which at least a portion of the fastening member can be positioned. The support member can be formed integrally with the body and/or the back case member.

It is possible that a portion of the fastening member protrudes from the support member, but that the support member itself is configured to prevent the fastening member from interaction with the vehicle when the fastening member is in the retracted position, e.g. by means of protruding members or the form of the support member.

According to an aspect, the body is formed by a bracket, such as a steel bracket, the bracket comprises a lower portion and an upper portion, wherein the support member is arranged on the lower portion of the bracket. The bracket is positioned on or in the proximity of the body facing surface of the support member. A bracket, and preferably a steel bracket, can easily be pressed to an appropriate form and is relatively cheap to manufacture.

The fastening member can be displaced, i.e. translated, in a wide variety of different manners such as in a vertical direction, a horizontal direction or combinations thereof. The fastening member, such as a screw, rod or bolt, has a longitudinal extension and the displacement between the first position and the retracted position is advantageously along the longitudinal extension of the fastening member. If the fastening member is positioned substantially vertical, the fastening member can be displaced in a vertical direction with respect to the vehicle after the load carrier foot is position to be mounted to the vehicle and along the longitudinal extension of the fastening member.

Just as a manner of orientation, the term vertical direction herein corresponds to the height of the vehicle. The term horizontal direction corresponds to the width or the longitudinal direction of the vehicle.

To bias the fastening member to a retracted position, the biasing member can be a spring such as a helical spring or a plate spring. Other biasing means are however plausible such as rubber or rubber like material, foam material such as expandable and compressible foam or other materials which can be compressed and which regains their original form before compression, or at least substantially regain their original form before compression.

The load carrier foot can use a biasing member which pushes the fastening member to the retracted position but it is also possible that the biasing member drag the fastening member to the retracted position, combinations of dragging and pushing the fastening member to the appropriate position, i.e. to a retracted position is also possible.

According to an aspect, the biasing member comprises an aperture adapted to receive the fastening member. When the biasing member comprises an aperture adapted for receiving the fastening member, the fastening member can be positioned to extend through the aperture of the biasing member. In an embodiment, the body of the load carrier foot comprises an aperture and the fastening member extends through a portion of the body, the biasing member and the support member. The biasing member could in such a case be positioned between the fastening member and a portion of the body.

To prevent the fastening member from escaping into the interior of the load carrier foot, or from biasing the fastening member, the fastening member can be provided with a stop portion. The load carrier foot can thus comprise a stop portion adapted to stop the fastening member from displacement in a longitudinal direction of the fastening member. The stop portion is preferably arranged on the fastening member. The stop portion of the fastening member can be arranged on the fastening member and preferably be adapted to stop the fastening member from further displacement in a longitudinal direction of the fastening member. The stop portion provides for a maximum distance which the biasing member can displace the fastening member. The stop portion should however be positioned so that the fastening member is displaced a sufficient distance to protect the vehicle from interaction with the fastening member. The stop portion can be ring attached to the fastening member, a protrusion e.g. welded to the fastening member.

As an alternative, the fastening member can be arranged on the biasing member to prevent the fastening member from escaping into the interior of the load carrier foot, or from biasing the fastening member. A flange extending from the biasing member can retain the fastening member to the biasing member.

According to an aspect, the fastening member comprises a head and is adapted to be displaced a fist distance. The first distance is defined by the distance between the position of the stop portion and the head of the fastening member. In cases were an intermediate member is positioned between the head of the fastening member, such as a plate spring, the thickness of the intermediate member is taken into account when defining the first distance.

The stop portion prevents the fastening member from displacement in a direction from the first position to the retracted position, e.g. if the fastening member has a longitudinal extension and the fastening member is adapted to be displaced from the first position to the retracted position along the longitudinal extension of the fastening member, the stop portion prevents the fastening member from displacement along the longitudinal extension at a predetermined point.

According to an aspect, the biasing member is arranged on a portion of the body and/or the support member to bias the fastening member. The biasing member, such as a spring plate, can be positioned, or attached, to the body, or between the body and a second member of the load carrier foot such as the support member.

It has been found that providing an automatic retraction of the fastening member, e..g by biasing the fastening member to a retracted position is advantageous. The load carrier foot is advantageously a fix point load carrier foot.

According to an aspect of the invention, the present invention also relates to a roof rack for a vehicle. The roof rack is specifically adapted to extend across the roof of a vehicle, and t be attached to the roof of a vehicle. The roof rack comprises at least one, preferably two, load carrier foot according to any one of the accompanying claims, or as described herein.

### BRIEF DESCRIPTION OF THE DRAWINGS

Non-limiting embodiments of the present invention will be described with reference to the accompanying drawings in which;
figure 1 shows parts of a roof rack, and a load carrier foot comprising a fastening arrangement comprising a fastening member in a first position in which the fastening member is positioned and engaged with a receiving member on the vehicle;
figure 2 shows an exploded view in perspective of the load carrier foot of figure 1;
figure 3 shows a cross section of the load carrier foot of figure 1 but with the fastening member of the fastening arrangement in a retracted position;
figure 4a shows a detailed view of parts of the load carrier foot of figure 1 when the fastening member is engaged with a receiving member and thus attached to the roof of the vehicle and;
figure 4b shows a detailed view of parts of the load carrier foot of figure 4a when the fastening member is disengaged with the receiving member and the fastening member is retracted to a protected position in which the fastening member is prevented from being exposed to interfere with the roof of the vehicle.

### DETAILED DESCRIPTION OF PREFERRED EMBODIMENTS

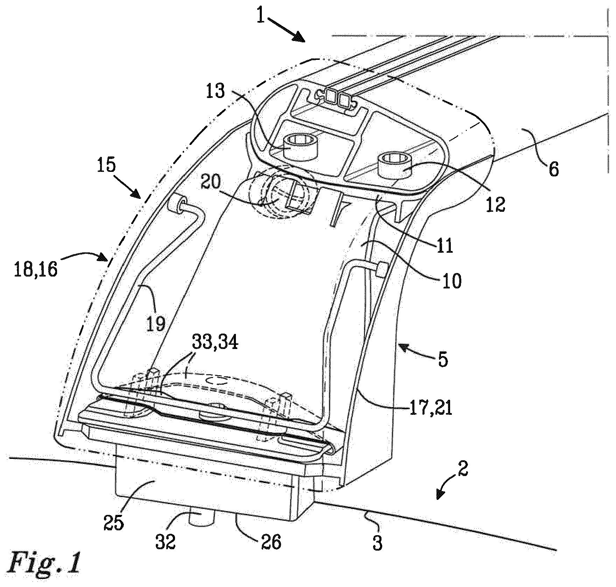

Figure 1 shows parts of a vehicle load carrier in the form of a roof rack 1 mounted to a vehicle 2 and more precisely a roof 3 of the vehicle 2. The roof rack 1 comprises a first and a second load carrier foot 5 (of which only one is shown in figure 1) and a load carrying bar 6 extending transversally across the roof 3 of the vehicle 2 when the roof rack 1 is mounted to the vehicle 2 as intended. The roof rack 1 provides the vehicle 2 with an extended loading capacity for transporting goods such as luggage, sport equipment, furniture or the like. A load carrier foot according to the present invention can be used in a wide variety of different vehicle load carriers such as for roof racks, roof boxes, vehicle bicycle holders, ski holders, vehicle cargo carriers or the like.

The load carrier foot 5 comprises a body 10 comprising a load carrying bar receiving surface 11 and a vehicle support surface. The load carrying bar 6 is fixedly secured at the load carrying bar receiving surface 11 using two screws 12, 13 but other fastening arrangements are possible such as fastening arrangements permitting the position of the load carrier foot 5 to be adjusted with respect to the load carrying bar 6. As is noticed, an intermediate material layer is positioned between the load carrying bar receiving surface 11 and the load carrying bar 6. A body case 15, formed by a first and a second case member 16, 17. The just mentioned intermediate material layer is in this case formed by a portion of the second case member 17. The first case member 16 is an openable front case member 18 permitting access into the interior of the load carrier foot 5. The openable front case member 18 is pivotable with respect to the body 10 of the load carrier foot 5 via a hinge member 19. A lock 20 enables a user to lock the openable front case member 18 in a closed position. The second case member 17 is a back case member 21 which is attached to the body 10 on the side facing towards the opposing load carrier foot, forming a protective casing together with the openable front case member 18 against dirt, rubble, snow, rain and/or sun light which could in the long run could harm the load carrier foot 5.

A support member 25, formed by an elastic rubber like material provides a vehicle facing surface 26 adapted to be adjacent the vehicle 2 to form a lenient surface against the vehicle 2, preventing the vehicle 2 from damage. The support member 25 is further useful for providing a good tension joint or screw joint assuring that the load carrier foot 5 is readily retained to the vehicle 2. The support member 25 also absorbs some of the forces which the roof rack can be exerted to, e.g. by the inertia of the goods transported on the roof rack 1. The support member 25 can be formed integrally or as a separate piece of material with respect to the body 10 and/or the back case member 21. Making the support member 25 as an individual component, i.e. as a separate piece of material, the support member 25 can be specifically adapted to one specific surface and vehicle.

The openable front case member 18 is in figure 1 illustrated slightly transparent to show the interior of the load carrier foot 5. A fastening arrangement 30 is arranged to permit a user to readily attach the load carrier foot 5 on the roof 3 of the vehicle 2. In the shown embodiment, the load carrier foot 5 is a fix point load carrier foot, adapted to be attached on a fixed position on the roof 3 of the vehicle 2, e.g. be screwed to a nut permanently attached to a specific portion of the roof 3 of the vehicle 2.

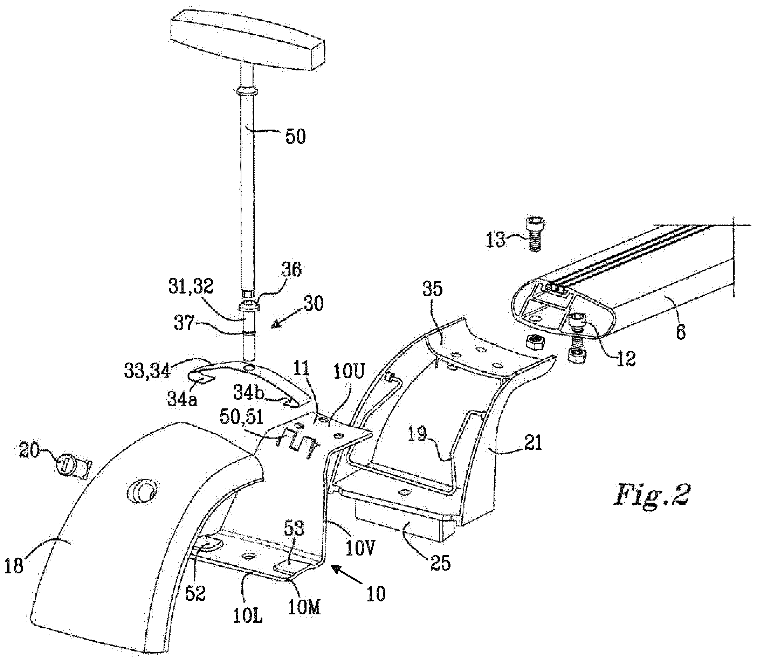

Figure 2 shows the load carrier foot 5 of figure 1 in exploded view. Figure 2 shows the lock 20, the openable front case member 18, the body 10, the hinge member 19, the support member 25, the back casing member 21, the load carrying bar 6, the two screws 12, 13 and cooperating nuts by which the load carrying bar 6 is attached to the body 10. The fastening arrangement 30 comprises a fastening member 31 in the form of a screw 32. The screw 32 comprises a head and a threaded portion. In the shown embodiment, the screw 32 further comprises a stop portion 37, in this case a stop member, extending around the periphery of the screw 32 and at a distance from the head 36 of the screw 36. The stop portion 37 can be formed integrally with the screw 32, i.e. not being a member but an integrally formed stop. In the shown embodiment the stop portion 37 is an attached ring.

A biasing member 33 formed by a plate spring 34 (sometimes referred to as a leaf spring). The plate spring 34 has an elongated arc form with a first and a second end 34a, 34b which bends back towards each other. Instead of using an arc form, the plate spring 34 could be oval, i.e. having a circular form. It could further be substantially half the arc form shown in figure 2, i.e. only one end support against the body 10 and/or the back case member 21, and the other end of the biasing member is arranged to the fastening member.

The user can easily access and turn the screw 32 using a screw driver 50 when the openable front case member 18 is in an open position.

The body 10 is the main component in the load carrier foot 5 providing the main structural integrity to the load carrier foot 5. The body 10 is formed by a steel bracket comprising a lower and an upper substantially horizontal portion 10U, 10L interconnected via substantially vertical portion 10V. The upper portion 10U comprises the load carrying bar receiving surface 11 and is adapted to be inserted in a slot 35 of the back case member 21, and connected to the load carrying bar 6 via the first and the second screws 12, 13. The lower portion 10L comprises a support member facing surface 10M adapted to be positioned adjacent a portion of the back case member 21 which forms an intermediate portion between the support member 25 and the body 10. The main purpose of the back case member 21 is to provide for a protective casing, to protect the fastening arrangement 30 and the load carrier foot 5 from the ambient environment and factors rising from the ambient environment such as snow, rain, wind sun light, and especially UV-light, rubble and dirt. The back case member 21 is thus not required for structural purposes in the shown embodiment.

The body 10 further comprises a lock receiving portion 50, formed by a pair of flanges 51 with which the lock 20 is adapted to cooperate with to lock the openable front case member 18 in a closed position.

A first and a second plate spring receiving portion 52, 53 are adapted to receive a first and a second end of the plate spring 34 respectively.

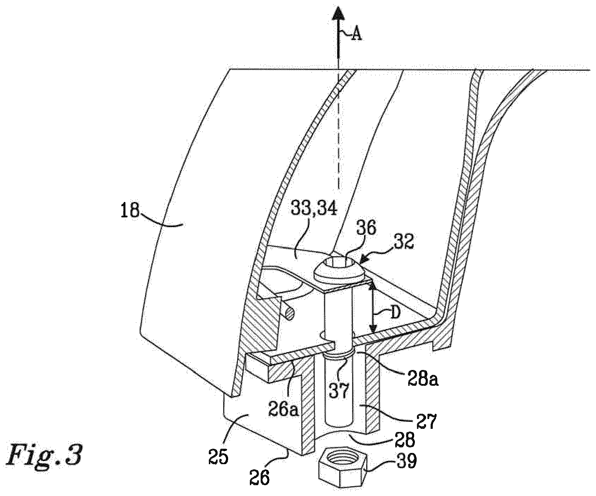

Figure 3 shows a cross section of the load carrier foot 5. The function of the fastening arrangement 30 of the load carrier foot 5 will be described in greater detail hereafter. Figure 3 shows, the support member 25, parts of the body 10, the screw 32 with its head 36, the spring plate 34, the back case member 21 and the openable front case member 18. The support member 25 has a vehicle facing side 26 and a body facing side 26a. If the support member 25 is formed integrally with the body 10 or the back case member 21, the body facing side 26a is an imaginary side or imaginary line at which the support member 25 transcends to the body 10 or the back case member 21.

In figure 3, the spring plate 34 biases the screw 32 in an upwardly, substantially vertical, direction indicated with the arrow A. The upwardly directed force imparted by the plate spring 34 retracts the screw 32 to a position in which no parts of the screw 32 extends outside of the support member 25. As is noticed, the support member 25 comprises an aperture 27 extending through the whole of the thickness of the support member 25. An opening 28 is formed by the vehicle facing side 26 of the support member 25. The aperture 27 defines a protective void in which at least parts of the screw 32 can be positioned so that the screw 32 does not extend out through the opening 28 of the aperture 27. In an embodiment, one end of the screw 32 can be aligned with the opening 28 of the aperture. The screw 32 is in this way concealed but more importantly prevented from contacting and accidentally damaging the roof 3 of the vehicle 2 when a user positions the roof rack 1 to the roof 3 of the vehicle 2.

When the roof rack 1 has been positioned in a position in which the screw 32 is aligned with a screw receiving member 39, such as a nut welded to the roof 3 of the vehicle 2, the user simply press the screwdriver 50 (shown in figure 2), or any other suitable tool, into engagement with the screw 32 with a downwardly directed force. The force imparted by the user will overcome the upwardly directed force imparted by the biasing member, in this case the plate spring 34. The screw 32 will thus start to descend downwardly and protrude from the opening 28 of the aperture 27. When the screw 32 contacts the screw receiving member, the user can start to turn the screwdriver 50 to tighten the screw 32 into sufficient engagement with the screw receiving member 39. Not only will the biasing member 33, in this case the plate spring 34, assist in protective the roof 3 of the vehicle 2 by keeping the screw 32 in a retracted position inside the void of the aperture 27 of the support member 25, but it will also assist in providing a good tension joint as is will function as a spring washer. One important difference with an ordinary spring washer is however the effective distance D the biasing member 33 retracts the screw 32. The effective distance D is preferably at least 3 mm, more preferably at least 5 mm. A suitable interval of the effective distance D that the screw can be retracted is from 3-40 mm, 5-40 mm, preferably 3-25 mm, more preferably 5-25 mm. Figure 3 shows a distance D, referred to as the effective distance, which the fastening member, i.e. the screw 32, can be displaced. The distance D is defined by the distance between the head 36 of the screw and the stop portion 37 of the screw 32. The stop portion is positioned adjacent the vehicle facing side of the lower portion 10L of the body 10 to prevent further displacement of the screw 32. It could alternatively rest against a vehicle facing side of the back case member 21.

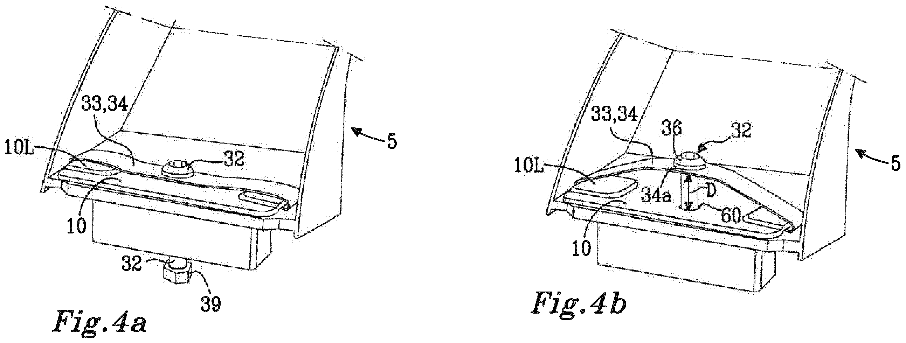

Turning to figures 4a-4b, when a user intendeds to remove the roof rack 1, i.e. remove the load carrier foot 5 from the vehicle 2, the user unwinds the screw 32 using the screwdriver 50 (shown in figure 2) or an equivalent tool. When the screw 32 disengages the screw receiving member 39, the biasing member 33, in this case the plate spring 34, biases, or pushes, the screw 32 back into the aperture 27 and thus the retracted position in which the screw 32 is protected from interaction with a surface of the vehicle 2, and especially with the roof 3 of the vehicle 2. The retracted distance D is also indicated in figure 4b.

In the shown embodiment, the fastening member is displacebale between a first position in which the fastening member protrudes from the load carrier foot enabling the fastening member to interact with a surface of the vehicle, i.e. to either be attached to the vehicle 2, or to accidentally damage the roof 3 of the vehicle 2 for example when the load carrier foot is positioned on the vehicle, and a retracted position. The retracted position is a position in which the fastening member is protected from interaction with a surface of the vehicle. The load carrier foot comprises a biasing member adapted to bias the fastening member to the retracted position.

As can be seen in figures 4a-4b, the biasing member 33, in this case the spring plate 34, extends in a direction corresponding to the longitudinal direction of the vehicle 2 after being mounted thereto. The spring plate 34 comprises an aperture 34a through which the screw 32 extend. The head 36 of the screw 32 has a diameter larger than the aperture 34a of the spring plate 34 so that the spring plate 34 effectively can impart a force component on the screw 32.

Optionally, instead or in addition with the spring plate, a helical spring can be used. The screw could in such an embodiment extend through the helical spring which cooperates in a similar manner with the head of the screw as described above. Other suitable biasing members can be rubber or other elastic polymer material synthetic or natural, foam material such a spunge like foam material.

The body 10 comprises an aperture 60 through which the screw 32 extends, more specifically, the lower portion 10L of the body 10 comprises the aperture 60. The spring plate 34 is thus partly positioned between the head 36 of the screw 32 and the lower portion 10L of the body 10. When the screw 32 is fully tightened with the screw receiving member 39 of the vehicle 2, the spring plate 34 is pressed against the lower portion 10L of the body 10.

The force of the spring plate 34, and a helical spring, if such is selected, should be selected so that the fastening member 31 can be automatically retracted when the fastening member is not engaging the corresponding receiving member on the vehicle 2, but not too strong so that the user need to apply an unproportional amount of force. A suitable spring force is from 10-500 N. The biasing member should further be selected so that the biasing force do not weaken due to wear or fatigue.

Instead of using a screw, such as the screw 32, as a fastening member such as a bolt or rod having a bayonet coupling can be used. The receiving member, such as the screw receiving member 39, is in this case a corresponding bayonet coupling member fixed to the roof 3 of the vehicle 2. Other attachment principles are plausible. The fastening member can be a screw adapted to be attached with a corresponding plate which is slideable in a track arranged along the length of the vehicle 2. Hence, the load carrier does not necessarily need to be a fix point load carrier foot although that is preferred.

Instead of retracting the screw 32 into an aperture 27 of the support member 25, the screw 32, or a fastening member 31, can be retracted into the load carrier foot. If the load carrier foot comprises a support member, the fastening member 31 can be retracted into the support member, or retracted past the support member i.e. fully through the support member. In an embodiment, the fastening member 31 is position so as to be extended and retracted in a side by side relation with the support member 25, i.e. not through a portion of the support member 25 as described above. This can be very useful if the load carrier foot 5 comprises a first and a second support member arranged a distance apart from each other. The fastening member 31 could in such a case be extended and retracted between the first and the second support members for example.

The retracted position does not need to conceal the screw 32, it is enough if the screw 32 is retracted so that the support member 25 can be positioned on the roof 3 of the vehicle 2 without the screw 32 interacting with the roof 3 of the vehicle 2, i.e. accidentally damaging the lacquer of the vehicle 2 for example. In some embodiments it may be preferable that the fastening member 31 is substantially fully concealed in the interior of the load carrier foot 5.

Figure 4b shows a distance D which the fastening member, i.e. the screw 32, can be displaced. The distance D is defined by the distance between the head 36 of the screw and the stop portion of the screw 32. The stop portion (referred to as 37 in figure 2) is in figure 4b positioned adjacent the vehicle facing side of the lower portion 10L of the body 10 to prevent further displacement of the screw 32.

The load carrier foot thus comprises a fastening arrangement for attachment to the roof of the vehicle. The fastening arrangement comprises a fastening member adapted to be displaced to an engagement position, in which it can engage a fastening receiving member on the vehicle and a retracted position. In the retracted position, the fastening member is prevented from interaction with the vehicle, or at least with the roof of the vehicle and/or the fastening receiving member, e.g. from accidentally damaging the roof of the vehicle.

## Claims

1. A load carrier assembly comprising a load carrier foot (5) for a vehicle load carrier (1) adapted to be attached to a vehicle (2) and a fixed position attachment member on a roof of a vehicle,
where said load carrier foot (5) comprising a body (10) comprising a load carrying bar receiving surface (11) for receiving a load carrying bar (6), a vehicle support surface (26) for resting against a surface of said vehicle (2), a fastening member (31) adapted to be operated by a user to attach said load carrier foot (5) to said fixed position attachment member on the vehicle (2), said fastening member (31) is displaceable between at least a first position in which said fastening member (31) interacts with the fixed position attachment member of the surface of said vehicle (3) when said load carrier foot is positioned on said vehicle (3), and a retracted position in which said fastening member (31) is protected from interaction with a surface of said vehicle (2), wherein said load carrier foot (5) comprises a biasing member (33) adapted to bias said fastening member (31) to said retracted position, wherein said body (10) further comprises a support member (25) comprising said vehicle support surface (26) and a body facing surface (26a), wherein said fastening member (31) is adapted to extend between said vehicle support surface (26) and said body facing surface (26a), wherein said support member (25) comprises an aperture (27), said aperture (27) having a first opening (28) facing said vehicle support surface (26) and a second opening (28a) facing said body facing surface (26a), wherein said fastening member (31) is adapted to extend through said aperture (27) of said support member (25), wherein the fastening member comprises a threaded portion and a head, where the fastening member is configured to be received by a threaded screw receiving member (39) of the fixed position attachment member of the vehicle (2) .

2. The load carrier assembly according to claim 1, wherein said fastening member (31) is a screw (32) or a rod comprising a bayonet coupling or a hook coupling.

3. The load carrier assembly according to any one of the claims 1 or 2, wherein said body (10) is formed by a bracket, said bracket comprising a lower portion (10L) and an upper portion (10U), wherein said support member (25) is arranged on said lower portion (10L) of said bracket.

4. The load carrier assembly according to any one of the preceding claims, wherein said fastening member (31) has a longitudinal extension and in that said displacement between said first position and said retracted position is along said longitudinal extension of said fastening member (31).

5. The load carrier assembly according to any of the preceding claims where the threaded screw receiving member (39) is a nut permanently attached to a specific portion of the roof of the vehicle or optionally welded to the roof (3) of the vehicle (2).

6. The load carrier assembly according to any one of the preceding claims, wherein said biasing member (33) is a spring, such as a helical spring or a plate spring (34), an elastic material and/or a foam material.

7. The load carrier assembly according to any one of the preceding claims, wherein said biasing member (33) comprises an aperture (27) and in that said fastening member (31) extends through said aperture (27) of said biasing member (33).

8. The load carrier assembly according to any one of the preceding claims, wherein said load carrier foot (5) comprises a stop portion (37) adapted to stop said fastening member (31) from displacement in a longitudinal direction of said fastening member (31), said stop portion (37) is preferably arranged on said fastening member (31).

9. The load carrier assembly according to claim 7, wherein said fastening member (31) comprises a head (36) and is adapted to be displaced a first distance (D), said first distance (D) being defined by the distance between the position of said stop portion (37) and said head (36) of said fastening member (31).

10. The load carrier assembly according to claim 7 or 8, wherein said stop portion (37) prevents said fastening member (31) from displacement in a direction from said first position to said retracted position.

11. The load carrier assembly according to claim 10, wherein said biasing member (33) is arranged on a portion of said body (10) and/or said support member (25) to bias said fastening member (31).

12. The load carrier assembly according to any one of the preceding claims, wherein said load carrier foot (5) is a fix point load carrier foot.

13. The load carrier assembly according to any one of the preceding claims, wherein said fastening member (31) is substantially fully concealed in the interior of said load carrier foot (5) when being in said retracted position.

14. The load carrier assembly according to any one of the preceding claims, wherein said support member (25) is formed integrally with said body (10).

15. The load carrier assembly according to any one of the preceding claims, wherein said support member (25) is adapted to be positioned directly onto the roof of said vehicle (2).

16. A roof rack for a vehicle comprising at least one, preferably two, load carrier foot (5) according to any one of the preceding claims.

## Patentansprüche

1. Lastenträgeranordnung umfassend einen Lastenträgerfuß (5) für einen Fahrzeuglastenträger (1), der eingerichtet ist, an einem Fahrzeug (2) angebracht zu werden, und ein ortsfestes Anbringungselement auf einem Dach eines Fahrzeugs,
wobei der Lastenträgerfuß (5) Folgendes umfasst: einen Körper (10), der eine einen Lastenträgerholm aufnehmende Oberfläche (11) zur Aufnahme eines Lastenträgerholms (6) umfasst, eine Fahrzeugstützfläche (26) zur Anlage gegen eine Oberfläche des Fahrzeugs (2), ein Befestigungselement (31), das eingerichtet ist, durch einen Benutzer betätigt zu werden, um den Lastenträgerfuß (5) an dem ortsfesten Anbringungselement auf dem Fahrzeug (2) anzubringen, wobei das Befestigungselement (31) zwischen wenigstens einer ersten Position, in der das Befestigungselement (31) mit dem ortsfesten Anbringungselement der Oberfläche des Fahrzeugs (3) in Wechselwirkung steht, wenn der Lastenträgerfuß auf dem Fahrzeug (3) positioniert ist, und einer eingefahrenen Position verschiebbar ist, in der das Befestigungselement (31) vor einer Wechselwirkung mit einer Oberfläche des Fahrzeugs (2) geschützt ist, wobei der Lastenträgerfuß (5) ein Vorspannelement (33) umfasst, das eingerichtet ist, das Befestigungselement (31) in die eingefahrene Position vorzuspannen, wobei der Körper (10) ferner ein Stützelement (25) umfasst, das die Fahrzeugstützfläche (26) und eine dem Körper zugewandte Fläche (26a) umfasst, wobei das Befestigungselement (31) eingerichtet ist, sich zwischen der Fahrzeugstützfläche (26) und der dem Körper zugewandten Fläche (26a) zu erstrecken, wobei das Stützelement (25) einen Durchlass (27) umfasst, wobei der Durchlass (27) eine erste Öffnung (28), die der Fahrzeugstützfläche (26) zugewandt ist, und eine zweite Öffnung (28a) aufweist, die der dem Körper zugewandten Fläche (26a) zugewandt ist, wobei das Befestigungselement (31) eingerichtet ist, sich durch den Durchlass (27) des Stützelements (25) zu erstrecken, wobei das Befestigungselement einen Gewindeabschnitt und einen Kopf umfasst, wobei das Befestigungselement so gestaltet ist, dass es durch ein Gewindeschraubenaufnahmeelement (39) des ortsfesten Anbringungselements des Fahrzeugs (2) aufgenommen wird.

2. Lastenträgeranordnung nach Anspruch 1, wobei es sich bei dem Befestigungselement (31) um eine Schraube (32) oder einen Stab mit einer Bajonettkupplung oder einer Hakenkupplung handelt.

3. Lastenträgeranordnung nach einem der Ansprüche 1 oder 2, wobei der Körper (10) durch einen Bügel gebildet ist, wobei der Bügel einen unteren Abschnitt (10L) und einen oberen Abschnitt (10U) umfasst, wobei das Stützelement (25) auf dem unteren Abschnitt (10L) des Bügels angeordnet ist.

4. Lastenträgeranordnung nach einem der vorhergehenden Ansprüche, wobei das Befestigungselement (31) eine Längenausdehnung aufweist und wobei die Verschiebung zwischen der ersten Position und der eingefahrenen Position entlang der Längenausdehnung des Befestigungselements (31) erfolgt.

5. Lastenträgeranordnung nach einem der vorhergehenden Ansprüche, wobei es sich bei dem Gewindeschraubenaufnahmeelement (39) um eine Mutter handelt, die dauerhaft an einem bestimmten Abschnitt des Dachs des Fahrzeugs angebracht ist oder gegebenenfalls an das Dach (3) des Fahrzeugs (2) angeschweißt ist.

6. Lastenträgeranordnung nach einem der vorhergehenden Ansprüche, wobei es sich bei dem Vorspannelement (33) um eine Feder, wie eine Schraubenfeder oder eine Blattfeder (34), ein elastisches Material und/oder ein Schaummaterial handelt.

7. Lastenträgeranordnung nach einem der vorhergehenden Ansprüche, wobei das Vorspannelement (33) einen Durchlass (27) umfasst und wobei sich das Befestigungselement (31) durch den Durchlass (27) des Vorspannelements (33) erstreckt.

8. Lastenträgeranordnung nach einem der vorhergehenden Ansprüche, wobei der Lastenträgerfuß (5) einen Anschlagabschnitt (37) umfasst, der eingerichtet ist, eine Verschiebung des Befestigungselements (31) in einer Längsrichtung des Befestigungselements (31) zu stoppen, wobei der Anschlagabschnitt (37) vorzugsweise auf dem Befestigungselement (31) angeordnet ist.

9. Lastenträgeranordnung nach Anspruch 7, wobei das Befestigungselement (31) einen Kopf (36) umfasst und eingerichtet ist, um eine erste Strecke (D) verschoben zu werden, wobei die erste Strecke (D) durch die Strecke zwischen der Position des Anschlagabschnitts (37) und des Kopfs (36) des Befestigungselements (31) definiert ist.

10. Lastenträgeranordnung nach Anspruch 7 oder 8, wobei der Anschlagabschnitt (37) eine Verschiebung des Befestigungselements (31) in einer Richtung von der ersten Position in die eingefahrene Position verhindert.

11. Lastenträgeranordnung nach Anspruch 10, wobei das Vorspannelement (33) auf einem Abschnitt des Körpers (10) und/oder des Stützelements (25) angeordnet ist, um das Befestigungselement (31) vorzuspannen.

12. Lastenträgeranordnung nach einem der vorhergehenden Ansprüche, wobei es sich bei dem Lastenträgerfuß (5) um einen Fixpunkt-Lastenträgerfuß handelt.

13. Lastenträgeranordnung nach einem der vorhergehenden Ansprüche, wobei das Befestigungselement (31) im Wesentlichen vollständig im Inneren des Lastenträgerfußes (5) verborgen ist, wenn es sich in der eingefahrenen Position befindet.

14. Lastenträgeranordnung nach einem der vorhergehenden Ansprüche, wobei das Stützelement (25) einteilig mit dem Körper (10) gebildet ist.

15. Lastenträgeranordnung nach einem der vorhergehenden Ansprüche, wobei das Stützelement (25) eingerichtet ist, direkt auf dem Dach des Fahrzeugs (2) positioniert zu werden.

16. Dachträger für ein Fahrzeug, der wenigstens einen, vorzugsweise zwei Lastenträgerfüße (5) nach einem der vorhergehenden Ansprüche umfasst.

## Revendications

1. Ensemble porteur de charge comprenant un pied porteur de charge (5) destiné à un porteur (1) de charge de véhicule conçu pour être fixé à un véhicule (2) et à un élément de fixation de position fixe sur le toit d'un véhicule,
où ledit pied porteur de charge (5) comprend un corps (10) comprenant une surface de réception (11) de barre porteuse de charge permettant de recevoir une barre (6) porteuse de charge, une surface de support de véhicule (26) venant en appui contre une surface dudit véhicule (2), un élément de fixation (31) conçu pour être utilisé par un utilisateur pour fixer ledit pied porteur de charge (5) audit élément de fixation de position fixe sur le véhicule (2), et où ledit élément de fixation (31) peut être déplacé entre au moins une première position dans laquelle ledit élément de fixation (31) interagit avec l'élément de fixation de position fixe de la surface dudit véhicule (3) lorsque ledit pied porteur de charge est positionné sur ledit véhicule (3), et une position rétractée dans laquelle ledit élément de fixation (31) est protégé d'une interaction avec une surface dudit véhicule (2), dans lequel ledit pied porteur de charge (5) comprend un élément de contrainte (33) conçu pour contraindre ledit élément de fixation (31) à ladite position rétractée, ledit corps (10) comprenant en outre un élément de support (25) comprenant ladite surface de support de véhicule (26) et une surface faisant face au corps (26a), ledit élément de fixation (31) étant conçu pour s'étendre entre ladite surface de support de véhicule (26) et ladite surface faisant face au corps (26a), ledit élément de support (25) comprenant une ouverture (27), ladite ouverture (27) ayant un premier orifice (28) faisant face à ladite surface de support de véhicule (26) et un second orifice (28a) faisant face à ladite surface faisant face au corps (26a), ledit élément de fixation (31) étant conçu pour s'étendre à travers ladite ouverture (27) dudit élément de support (25), l'élément de fixation comprenant une partie filetée et une tête, où l'élément de fixation est configuré pour être reçu par un élément de réception de vis filetée (39) de l'élément de fixation de position fixe du véhicule (2).

2. Ensemble porteur de charge selon la revendication 1, dans lequel ledit élément de fixation (31) est une vis (32) ou une tige comprenant un couplage à baïonnette ou un couplage à crochet.

3. Ensemble porteur de charge selon l'une quelconque des revendications 1 et 2, dans lequel ledit corps (10) est formé d'une patte de fixation, ladite patte de fixation comprenant une partie inférieure (10L) et une partie supérieure (10U), ledit élément de support (25) étant agencé sur ladite partie inférieure (10L) de ladite patte de fixation.

4. Ensemble porteur de charge selon l'une quelconque des revendications précédentes, dans lequel ledit élément de fixation (31) présente une extension longitudinale, et dans lequel ledit déplacement entre ladite première position et ladite position rétractée s'effectue le long de ladite extension longitudinale dudit élément de fixation (31).

5. Ensemble porteur de charge selon l'une quelconque des revendications précédentes, où l'élément de réception de vis filetée (39) est un écrou fixé en permanence à une partie spécifique du toit du véhicule ou éventuellement soudé au toit (3) du véhicule (2).

6. Ensemble porteur de charge selon l'une quelconque des revendications précédentes, dans lequel ledit élément de contrainte (33) est un ressort, tel qu'un ressort hélicoïdal ou un ressort à lame (34), un matériau élastique et/ou un matériau en mousse.

7. Ensemble porteur de charge selon l'une quelconque des revendications précédentes, dans lequel ledit élément de contrainte (33) comprend une ouverture (27), et dans lequel ledit élément de fixation (31) s'étend à travers ladite ouverture (27) dudit élément de contrainte (33).

8. Ensemble porteur de charge selon l'une quelconque des revendications précédentes, dans lequel ledit pied porteur de charge (5) comprend une partie d'arrêt (37) conçue pour arrêter le déplacement dudit élément de fixation (31) dans une direction longitudinale dudit élément de fixation (31), et dans lequel ladite partie d'arrêt (37) est agencée de préférence sur ledit élément de fixation (31).

9. Ensemble porteur de charge selon la revendication 7, dans lequel ledit élément de fixation (31) comprend une tête (36) et est conçu pour être déplacé d'une première distance (D), ladite première distance (D) étant définie par la distance entre la position de ladite partie d'arrêt (37) et de ladite tête (36) dudit élément de fixation (31).

10. Ensemble porteur de charge selon la revendication 7 ou 8, dans lequel ladite partie d'arrêt (37) empêche le déplacement dudit élément de fixation (31) dans une direction de ladite première position à ladite position rétractée.

11. Ensemble porteur de charge selon la revendication 10, dans lequel ledit élément de contrainte (33) est agencé sur une partie dudit corps (10) et/ou ledit élément de support (25) pour contraindre ledit élément de fixation (31).

12. Ensemble porteur de charge selon l'une quelconque des revendications précédentes, dans lequel ledit pied porteur de charge (5) est un pied porteur de charge à point fixe.

13. Ensemble porteur de charge selon l'une quelconque des revendications précédentes, dans lequel ledit élément de fixation (31) est pratiquement entièrement dissimulé à l'intérieur dudit pied porteur de charge (5) lorsqu'il se trouve dans ladite position rétractée.

14. Ensemble porteur de charge selon l'une quelconque des revendications précédentes, dans lequel ledit élément de support (25) est formé intégralement par ledit corps (10).

15. Ensemble porteur de charge selon l'une quelconque des revendications précédentes, dans lequel ledit élément de support (25) est conçu pour être positionné directement sur le toit dudit véhicule (2).

16. Galerie de toit pour un véhicule comprenant au moins un pied porteur de charge (5), de préférence deux, selon l'une quelconque des revendications précédentes.
